# EUROPÄISCHE PATENTSCHRIFT

(11) **EP 2 385 020 B1**
(45) Veröffentlichungstag und Bekanntmachung des Hinweises auf die Patenterteilung: **01.03.2017**
(21) Anmeldenummer: 11164988.5
(22) Anmeldetag: 05.05.2011
(51) Int. Cl.: C02F 1/42, C02F 1/467

(54) **Verfahren zur Regeneration einer Wasserenthärtungsanlage**
Method for regenerating a water softening assembly
Procédé de régénération d'une installation d'adoucissement d'eau

(30) Priorität: 07.05.2010 DE 102010028756
(43) Veröffentlichungstag der Anmeldung: 09.11.2011
(73) Patentinhaber: Judo Wasseraufbereitung GmbH, 71364 Winnenden (DE)
(72) Erfinder: Söcknick, Ralf, 70806, Kornwestheim (DE); Stallmann, Peter, 71522, Backnang (DE); Kühn, Walter, 71522, Backnang (DE); Haug, Alexander, 71686, Remseck (DE)
(74) Vertreter: Kohler Schmid Möbus Patentanwälte

(56) Entgegenhaltungen:
- EP-A1- 0 635 304
- DE-C1- 4 221 013
- DE-U1- 9 302 101
- JP-A- 11 347 426
- JP-A- 2003 004 618
- JP-A- 2007 260 637
- JP-A- 2009 160 585
- US-A- 4 275 448
- US-A1- 2003 052 060

## Beschreibung

Die Erfindung betrifft ein Verfahren zur Regeneration einer Wasserenthärtungsanlage,
wobei Salzsole mit Verdünnungswasser vermischt wird und die verdünnte Salzsole in eine Enthärtungsvorrichtung, insbesondere umfassend mindestens einen Behälter mit Ionentauscherharz, eingeleitet wird.

Ein solches Verfahren ist aus der DE 43 13 468 C2 bekannt geworden.

Zur Bereitstellung von enthärtetem Wasser wird das zu enthärtende Wasser (auch Rohwasser genannt) durch eine Enthärtungsvorrichtung geleitet.

Enthärtungsvorrichtungen basieren typischerweise auf dem Prinzip des Ionentauschs. Die Härtebildner Calziumionen und Magnesiumionen werden dabei gegen Natriumionen ausgetauscht. Dazu wird ein lonentauscherharz eingesetzt, über welches das zu enthärtende Wasser geleitet wird.

Ein lonentauscherharz kann aber nur eine begrenzte Menge an Härtebildnern binden. Ist das lonentauscherharz erschöpft, so wird über das lonentauscherharz geleitetes Wasser nicht mehr enthärtet. Daher muss das lonentauscherharz rechtzeitig vor einer Erschöpfung regeneriert werden. Dazu wird eine Regeneriermittellösung, in der Regel eine Kochsalzlösung, über das Harz geleitet. Die im Regeneriermittel enthaltenen Natriumionen verdrängen dabei die Härtebildner im lonentauscherharz.

Aus der WO 03/087460 A1 ist es bekannt, im Rahmen einer Regeneration mit einer Pumpe aus einem Solebehälter gesättigte Salzsole direkt in einen Harzbehälter zu befördern. Dieses Vorgehen ist zwar einfach, jedoch ist die Salzausnutzung bei Verwendung von gesättigter Salzsole zur Regeneration relativ schlecht. Es wird weit mehr Salz zur Regeneration verbraucht als nötig.

Die DE 43 13 468 C2 schlägt vor, zusätzlich zu einem Solebehälter (enthaltend festes Regeneriersalz und gesättigte Salzsole) einen Mischbehälter einzusetzen. Dieser Mischbehälter wird mit einer definierten Menge gesättigter Salzsole befüllt, und dann wird eine definierte Menge Frischwasser zugegeben, so dass eine verdünnte Salzsole im Mischbehälter vorliegt. Ein Teil des Inhalts des Mischbehälters wird dann in den Solebehälter abgelassen, um diesen aufzufüllen. Der restliche Inhalt des Mischbehälters steht für die nächste Regeneration zur Verfügung. Bei einer Regeneration wird der Inhalt des Mischbehälters mit einem Injektor, umfassend eine Treibwasserdüse, zum Ionentauscher befördert. Alternativ kann der Inhalt des Mischbehälters mit einer Pumpe zum Ionentauscher befördert werden.

Bei Verwendung eines Injektors erfolgt eine weitere Verdünnung der verdünnten Salzsole aus dem Mischbehälter mit Treibwasser. Injektoren sind in der Regel im Spritzgussverfahren hergestellt, und die damit verbunden Fertigungstoleranzen verursachen eine erhebliche Streuung des Mischungsverhältnisses von verdünnter Salzsole und Treibwasser, so dass die Konzentration des Regeneriermittels, welches dem Ionentauscher zugeführt wird, nur sehr schwierig genau einstellbar ist.

Bei Verwendung einer Pumpe wird die im Mischbehälter vorgelegte verdünnte Salzsole unmittelbar zur Regeneration eingesetzt. Eine Änderung des Mischungsverhältnisses von Frischwasser und konzentrierter Salzsole ist für die bereits vorgelegte verdünnte Salzsole gar nicht möglich, und für zukünftige im Mischbehälter zu bereitende Chargen allenfalls mit erheblichen Umbauten möglich. Eine solche Änderung könnte beispielsweise gewünscht sein, wenn die Regenerationszeit auf Kosten der Salzausbeute verkürzt werden soll (wozu eine höhere Salzkonzentration nötig wäre), oder wenn die unverdünnte Sole aufgrund von kurzen Lösezeiten noch nicht ihre (gesättigte) Endkonzentration erreicht hat.

JP2003004618A offenbart eine Wasserenthärtungsanlage mit einem eine Salzsole enthaltenden Vorratsgefäß. Die Salzsole wird aus dem Vorratsgefäß durch eine Leitung und über einen weiteren Behälter sowie ein Ventil zu einer Dosierstelle gefördert, wo Verdünnungswasser zugemischt wird. Ein Sensor misst in der von dem Vorratsgefäß abgehenden Soleleitung den hydrostatischen Druck, und eine Recheneinheit bestimmt aus dem gemessenen Druckwert die Konzentration der konzentrierten Sole.

### Aufgabe der Erfindung

Es ist die Aufgabe der vorliegenden Erfindung, ein Verfahren zur Regeneration einer Enthärtungsvorrichtung bereitzustellen, bei dem das Mischungsverhältnis in einer verdünnten Salzsole, die der Enthärtungsvorrichtung zugeführt wird, an die jeweilige Betriebssituation angepasst werden kann.

### Kurze Beschreibung der Erfindung

Diese Aufgabe wird gelöst durch ein Verfahren der eingangs genannten Art, das dadurch gekennzeichnet ist, dass Salzsole während ihres Transports zur Enthärtungsvorrichtung mit einer Pumpe in einen Strom von Verdünnungswasser zudosiert wird.

Im Rahmen der Erfindung wird in einem Vorratsgefäß eine (konzentrierte) Salzsole bereitgestellt, typischerweise wobei der Behälter auch festes Regeneriersalz enthält und die im Vorratsgefäß enthaltene Sole gesättigt ist. Mit einer Pumpe wird dann (konzentrierte) Salzsole aus dem Vorratsgefäß gefördert und einem Strom von Verdünnungswasser zudosiert. Das Gemisch von (konzentrierter) Salzsole und Verdünnungswasser wird in die Enthärtungsvorrichtung bzw. das lonentauscherharz zur Regeneration eingeleitet.

Dadurch, dass das Gemisch (die verdünnte Salzsole) erst bei der Befüllung des lonentauscherharzes bereitet wird, kann das Mischungsverhältnis in der verdünnten Salzsole kurzfristig eingestellt werden, etwa durch Einstellung der durch die Pumpe geförderten Solemenge pro Zeit, oder durch Justage des Verdünnungswasserstroms. Dadurch ist es möglich, sich auf eine geänderte Betriebssituationen einzustellen. Insbesondere können Schwankungen in der Konzentration der (konzentrierten) Salzsole, die sich durch unterschiedliche Lösezeiten, Salztablettengrößen oder Temperaturschwankungen ergeben können, ausgeglichen werden und eine bestimmte Konzentration der verdünnten Salzsole durch Nachregelung des Mischungsverhältnisses gehalten werden; ebenso kann die Konzentration der verdünnten Salzsole gezielt geändert werden, beispielsweise um durch Erhöhung der Konzentration die Regenerationszeit auf Kosten der Salzausbeute zu verkürzen.

Durch die Verwendung der Pumpe ist die Einstellung des Mischungsverhältnisses auch sehr viel genauer möglich als mit einem Injektor. Die Pumpe kann eine Förderung der (konzentrierten) Salzsole unabhängig vom Verdünnungswasserstrom vornehmen (anders als bei einem Injektor, bei denen neben Fertigungstoleranzen auch die Druckverhältnisse im System für das Saugverhalten relevant sind). Im Rahmen der Erfindung besteht auch keine Bindung an die Konzentration einer Salzsole in einem Mischbehälter; ein Mischbehälter zur Bevorratung von verdünnter Salzsole ist im Rahmen der vorliegenden Erfindung grundsätzlich unnötig.

### Bevorzugte Varianten der Erfindung

Bei einer bevorzugten Variante des erfindungsgemäßen Verfahrens wird das Mischungsverhältnis von Salzsole zu Verdünnungswasser auf einen Wert zwischen 1:1 und 1:15, bevorzugt zwischen 1:3 und 1:8 eingestellt.
Die angegebenen Mischungsverhältnisse ermöglichen eine optimale Salzausbeute, bei gleichzeitig guter Regenerationsgeschwindigkeit (d.h. kurzer notwendiger Einwirkzeit der verdünnten Salzsole auf das lonentauscherharz). Die angegebenen Verhältnisse gelten insbesondere für gesättigte NaCl-Salzsole. Die Einstellung des Mischungsverhältnisses erfolgt bevorzugt über die Einstellung des Förderstroms an der Pumpe (d.h. das geförderte Volumen pro Zeit; man beachte, dass die Salzsole dabei auch schubweise/diskontinuierlich von der Pumpe gefördert werden kann, "Dosierpumpe"); es ist aber auch möglich, alternativ oder zusätzlich den Strom von Verdünnungswasser mit einem Regelorgan einzustellen. Zur Einstellung des Mischungsverhältnisses wird in der Regel eine elektronische Steuereinrichtung eingesetzt.

Die Konzentration der verdünnten Salzsole wird mit einem Sensor überwacht. Mittels des Sensors können Schwankungen in der Konzentration der verdünnten Salzsole erkannt werden, auf die dann im Rahmen der Steuerung der Regeneration reagiert werden kann.

Das Mischungsverhältnis von Salzsole und Verdünnungswasser wird in Abhängigkeit von der experimentell bestimmten Konzentration der verdünnten Salzsole nachgeregelt. Dadurch kann die Konzentration der verdünnten Salzsole auf einen gewünschten Wert eingeregelt (und bei diesem gehalten) werden; dieser gewünschte Wert kann auch zwischen Regenerationen verändert werden. Insbesondere ist es möglich, eine niedrigere Konzentration der (konzentrierten) Salzsole als in Sättigung auszugleichen (etwa wenn festes Regeneriersalz erst kurz vor Regenerationsbeginn nachgefüllt wurde, und der Salzlösevorgang noch nicht abgeschlossen ist; in diesem Fall erkennt der Sensor den noch nicht abgeschlossenen Lösevorgang, und es wird entsprechend weniger stark verdünnt). Für die Überwachung und Nachregelung wird eine elektronische Steuereinrichtung eingesetzt. Man beachte, dass die eigentliche Konzentration der verdünnten Salzsole nicht berechnet zu werden braucht; es genügt, wenn der Sensor einen Messwert erfasst, der von der Konzentration abhängt (bevorzugt direkt proportional), hier die elektrische Leitfähigkeit. Vorteilhafter Weise wird das Mischungsverhältnis von Salzsole und Verdünnungswasser erst dann nachgeregelt, wenn die experimentell bestimmte Konzentration der verdünnten Salzsole um mehr als einen ersten Grenzwert GW1 von einem vorgegebenen Sollwert SW abweicht. Dadurch kann die Häufigkeit der Regelvorgänge und damit der Verschleiß reduziert werden. Man beachte, dass GW1 und SW in den Einheiten des experimentellen Messwerts des Sensors angegeben werden können.

Eine andere vorteilhafte Weiterbildung sieht vor, dass eine Alarmmeldung erfolgt, wenn die experimentell bestimmte Konzentration der verdünnten Salzsole einen vorgegebenen Grenzwert GW2 unterschreitet. Durch den Alarm kann ein Benutzer auf einen Defekt oder einen Salzmangel ("Leermeldung") hingewiesen werden. Als Alarmsignal kann ein optisches und/oder akustisches und/oder elektrisches Signal und/oder ein Funksignal (beispielsweise an ein Mobiltelefon oder an die Leitwarte eines Gebäudes) eingesetzt werden. Zusätzlich zur Alarmmeldung kann die Regeneration abgebrochen, der Wasserfluss durch die Enthärtungsvorrichtung gesperrt und/oder eine Wasserentnahme an dem Wassersystem, welches der Wasserenthärtungsanlage nachgeordnet ist, gesperrt werden. Man beachte wiederum, dass GW2 in den Einheiten des experimentellen Messwerts angegeben werden kann.

Zur Überwachung der Konzentration der verdünnten Salzsole wird die Leitfähigkeit der verdünnten Salzsole gemessen wird. Die elektrische Leitfähigkeit ist direkt proportional zur Salzkonzentration und daher leicht auswertbar. Leitfähigkeitssensoren sind weiterhin kostengünstig und robust. Falls gewünscht kann zusätzlich zur Leitfähigkeit auch die Temperatur gemessen und deren Einfluss auf die Leitfähigkeit herausgerechnet werden. Bevorzugt ist weiterhin eine Verfahrensvariante, bei der die Salzsole mit der Pumpe in den Sauganschluss eines Injektors dosiert wird. Handelsübliche Wasserenthärtungsanlagen sind in der Regel mit Injektoren ausgestaltet; eine Umrüstung auf das erfindungsgemäße Verfahren ist dann einfach und kostengünstig möglich. Klassische Nachteile eines Injektors (siehe oben) werden vermieden; der Injektor kann insbesondere einfach die gesamte von der Pumpe geförderte Solemenge einsaugen.

Bevorzugt ist auch eine Verfahrensvariante, bei der der Strom von Verdünnungswasser über ein Regelorgan gesteuert wird. Als Regelorgan kann beispielsweise ein Ventil, eine Drossel, eine Düse oder ein Durchflusskonstanthalter dienen. Das Regelorgan (etwa ein Ventil) kann über einen Stellmotor, der von der elektronischen Steuereinrichtung angesteuert wird, verstellt werden. Dadurch kann das Mischungsverhältnis von Salzsole zu Verdünnungswasser ebenfalls beeinflusst werden. Über die Steuerung der Pumpe und/oder des Regelorgans im Verdünnungswasserstrom lassen sich die Konzentration sowie der Strom bzw. das Volumen der Regeneriermittellösung exakt steuern.

Besonders bevorzugt ist auch eine Variante des erfindungsgemäßen Verfahrens, bei der die verdünnte Salzsole vor der Einleitung in die Enthärtungsvorrichtung eine Mischstrecke durchfließt.
Konzentrationsunterschiede im Strom der Regeneriermittellösung (d.h. der verdünnten Salzsole) werden dann vermieden bzw. vor Erreichen der Enthärtungsvorrichtung ausgeglichen.
In den Rahmen der vorliegenden Erfindung fällt auch eine Wasserenthärtungsanlage gemäß Anspruch 9.

Die Wasserenthärtungsanlage ist für die Durchführung eines oben beschriebenen, erfindungsgemäßen Verfahrens ausgebildet und wird bevorzugt zur Durchführung eines oben beschriebenen, erfindungsgemäßen Verfahrens eingesetzt. Die Pumpe gestattet ein kontrolliertes Zudosieren von (konzentrierter) Salzsole aus dem Vorratsgefäß (welches typischerweise auch festes Regeneriersalz zusammen mit gesättigter Salzsole enthält) zu einem Verdünnungswasserstrom, und damit eine einfache Veränderung oder Nachregelung des Mischungsverhältnisses von Salzsole und Verdünnungswasser. Schwankungen in der Konzentration der (konzentrierten) Salzsole (etwa bei zu kurzen Lösungszeiten) können ausgeglichen werden, oder auch unterschiedliche gewünschte Konzentrationen von Regeneriermittellösung (verdünnter Salzsole) für die Regeneration können kurzfristig und auf einfache Weise bereit gestellt werden. Am einfachsten wird dabei der Förderstrom der Pumpe entsprechend gewählt, und/oder der Fluss an Verdünnungswasser wird (unabhängig vom durch die Pumpe definierten Strom an konzentrierter Salzsole) angepasst.

Es ist in der erfindungsgemäßen Wasserenthärtungsanlage ein Leitfähigkeitssensor zur Messung der Konzentration der durch das Verdünnungswasser verdünnten Salzsole vorhanden. Mit dem Sensor können Schwankungen in der Konzentration der verdünnten Salzsole erkannt werden, so dass auf diese Schwankungen reagiert werden kann. Der Sensor ist bevorzugt im Zulauf für Regeneriermittellösung (Mischstrecke von der Dosierstelle zur Enthärtungsvorrichtung) angeordnet.

Eine elektronische Steuereinrichtung ist vorhanden, die dazu ausgebildet ist, anhand der vom Sensor übermittelten Messwerte ein Mischungsverhältnis von Salzsole und Verdünnungswasser an der Dosierstelle nachzuregeln. Dadurch können Schwankungen im der Konzentration der (konzentrierten) Salzsole ausgeglichen werden. Typischerweise regelt die Steuereinheit die Konzentration der verdünnten Salzsole auf einen gewünschten Wert ein. Die Steuereinheit stellt das Mischverhältnis am einfachsten über den Förderstrom der Pumpe ein; alternativ oder zusätzlich kann auch ein Regelorgan in der Verdünnungswasser führenden Leitung angesteuert werden. Die Steuereinheit enthält typischerweise eine Kennlinie zur Bestimmung des NaCl-Gehalts (d.h. der NaCt-Konzentration) aus den experimentell ermittelten Leitfähigkeitsdaten. Leitfähigkeitssensoren sind besonders kostengünstig und zuverlässig.

Bei einer anderen vorteilhaften Weiterbildung ist ein Signalgeber vorhanden. Mit dem Signalgeber können insbesondere gemessene Solekonzentrationen, die stark (mehr als eine zulässige Grenze) von einem Sollwert abweichen, gemeldet werden. Der Benutzer kann dann die Ursache bestimmen (etwa Salzmangel) und Abhilfe schaffen (etwa festes Regeneriersalz nachfüllen). Bevorzugt ist auch eine Ausführungsform, bei der die Dosierstelle als ein Injektor ausgebildet ist. Über den Injektor ist die erfindungsgemäße Wasserenthärtungsanlage leicht nachrüstbar. Die Salzsole führende Leitung ist dabei am Sauganschluss des Injektors angeschlossen.

Ebenfalls bevorzugt ist eine Ausführungsform, bei der in der Verdünnungswasser führenden Leitung ein Regelorgan angeordnet ist. Über das Regelorgan kann ebenfalls das Mischungsverhältnis von (konzentrierter) Salzsole und Verdünnungswasser eingestellt werden; die Pumpe braucht dann lediglich über eine ein/aus-Funktion zu verfügen. Als Regelorgan kann insbesondere ein Ventil, eine Drossel, eine Düse oder ein Durchflusskonstanthalter eingesetzt werden. Das Regelorgan ist typischerweise über einen Stellmotor zur Einstellung des Flusses an Verdünnungswasser verstellbar.

Bei einer bevorzugten Ausführungsform ist eine Mischstrecke vorhanden, die von der Dosierstelle zur Enthärtungsvorrichtung führt. Über die Dosierstelle können sich Konzentrationsunterschiede in der verdünnten Salzsole (etwa bei gepulster Zudosierung von Salzsole durch die Pumpe) ausgleichen, bevor das lonentauscherharz erreicht wird.

Vorteilhaft ist eine Weiterbildung dieser Ausführungsform, wobei die Mischstrecke eine Mischkammer aufweist, in der eine Elektrode für die Erzeugung von Chlor angeordnet ist. Dadurch kann Chlorgas für eine Desinfektion des lonentauscherharzes bereitgestellt werden.

Bevorzugt ist auch eine Ausführungsform, bei der an der Dosierstelle zwei Düsen für Verdünnungswasser münden. Dadurch kann eine Grobverdünnung und eine Feinverdünnung apparativ voneinander getrennt werden, und eine Konzentrationseinstellung der verdünnten Salzsole (Regeneriermittellösung) kann mit höherer Genauigkeit erfolgen.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung wird anhand von Zeichnungen und Ausführungsbeispielen näher erläutert. Es zeigen:
- Fig.1: den schematischen Aufbau einer nicht erfindungsgemäßen Wasserenthärtungsanlage;

- Fig. 2: den schematischen Aufbau einer Ausführungsform einer erfindungsgemäßen Wasserenthärtungsanlage, zur Anwendung des erfindungsgemäßen Regenerationsverfahrens, mit einem Leitfähigkeitssensor in einer Mischstrecke;
- Fig. 3: einen Längsschnitt durch einen Steuerkopf einer erfindungsgemäßen Wasserenthärtungsanlage mit Mischkammersystem;
- Fig. 4: einen Schnitt durch den Steuerkopf entlang C-C in Fig. 3;
- Fig. 5: einen Schnitt durch den Steuerkopf entlang D-D in Fig. 3.

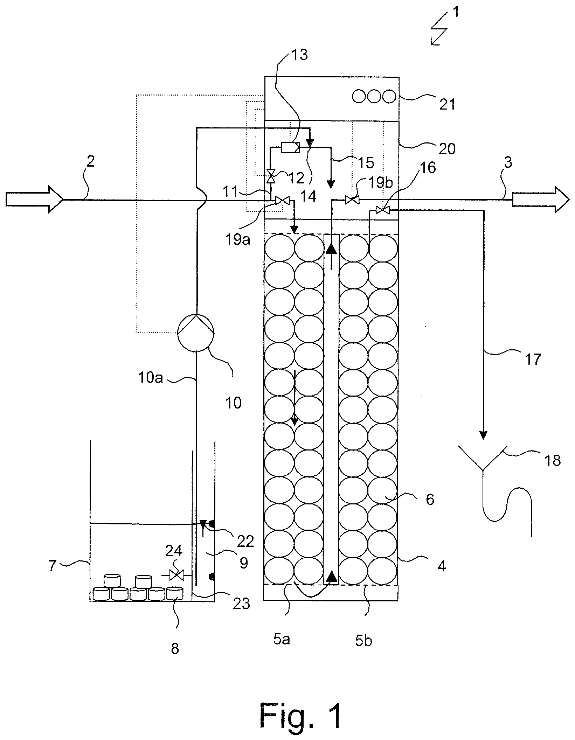

Die **Fig. 1** zeigt schematisch den Aufbau einer nicht erfindungsgemäßen Wasserenthärtungsanlage 1, umfassend insbesondere eine Enthärtungsvorrichtung 4, einen Steuerkopf 20 und ein Vorratsgefäß 7 mit (konzentrierter) Salzsole 9.

Die Wasserenthärtungsanlage 1 ist über einen Zulauf 2 für Rohwasser an ein lokales Wassernetz, etwa das Trinkwassernetz angeschlossen. Im *Normalbetrieb* wird das Rohwasser aus dem lokalen Wassernetz über das geöffnete Ventil 19a den Behältern 5a, 5b mit lonentauscherharz 6 der Enthärtungsvorrichtung 4 zugeleitet, dort enthärtet und über ein geöffnetes Ventil 19b einem Ablauf 3 für enthärtetes Wasser zugeführt. An den Ablauf 3 schließt sich beispielsweise eine Hauswasserinstallation an. Während des Normalbetriebs sind die Ventile 12 und 16 geschlossen. Man beachte, dass für einen Pendelbetrieb auch jeweils nur die Nutzung eines der Behälter 5a, 5b für die Enthärtung möglich ist, während der andere Behälter 5a, 5b ungenutzt bleibt oder gerade regeneriert wird (was im folgenden nicht näher erläutert werden soll).

Zur Regeneration des lonentauscherharzes 6 in den Behältern 5a, 5b stellt eine Steuereinheit 21 im Steuerkopf 20 die Enthärtungsvorrichtung 4 auf *Regenerationsbetrieb* um. Das Ventil 12 im Zulauf 11 für Verdünnungswasser (auch bezeichnet als Verdünnungswasser führende Leitung 11) wird geöffnet, so dass Rohwasser über ein Durchfluss-Regelorgan 13 an einer Dosierstelle 14 einem Zulauf 15 für Regeneriermittellösung zufließt. Der Zulauf 15 mündet in die Behälter 5a, 5b (nur angedeutet in Fig. 1). An der Dosierstelle 14 wird dem Rohwasserstrom (konzentrierte) Salzsole 9 zudosiert, welche mit einer Pumpe 10 über die Salzsole führende Leitung 10a aus dem Vorratsgefäß 7 gefördert wird. Die Salzsole 9 ist normalerweise gesättigt, da im Vorratsgefäß 7 die Salzsole 9 über festem Regneneriersalz 8 steht. Man beachte, dass die Salzsole 9 aus einem Nebenabteil des Vorratsgefäßes 7, das durch eine Zwischenwand 23 abgetrennt ist, gepumpt wird; das Nebenabteil wird aus dem Hauptabteil des Vorratsgefäßes 7 über das Ventil 24 befüllt, welches über einen Schwimmerschalter 22 angesteuert wird.

Da durch das Rohwasser die Salzsole 9 verdünnt wird, wird der Rohwasserstrom an der Dosierstelle 14 auch als Verdünnungswasserstrom bezeichnet. Die verdünnte Salzsole ("Regeneriermittellösung") wird im Zulauf 15 durchmischt (d.h. der Zulauf 15 dient gleichzeitig als Mischstrecke). Die verdünnte Salzsole fließt nach Passieren der Behälter 5a, 5b über einen Ablauf 17 für verbrauchte Regeneriermittellösung bei geöffnetem Ventil 16 einem Abwasserkanal 18 zu.

Man beachte, dass die Steuereinheit 21 im Steuerkopf 20 im gezeigten Ausführungsbeispiel alle Ventile 19a, 12, 19b, 16 der Enthärtungseinrichtung 4 sowie die Pumpe 10 und das Regelorgan 13 ansteuert.

Zur Regeneration des Ionenaustauscherharzes 6 wird also die Salzsole 9 mittels der Pumpe 10 in den Zulauf 11 für Verdünnungswasser zudosiert. Der Förderstrom der Pumpe 10 (welcher kontinuierlich oder gepulst sein kann) kann über eine elektronische Steuereinrichtung 21 gesteuert werden. Der Strom mit Verdünnungswasser kann in der dargestellten Ausführungsform über das Regelorgan 13, das von der elektronischen Steuereinrichtung 21 gesteuert wird, ebenfalls variiert werden.

Die Erfindung ermöglicht es, Salzsole 9 je nach Anforderung gezielt zu verdünnen und dann als Regeneriermittellösung zur Verfügung zu stellen. So kann beispielsweise für eine schnelle Regeneration die Regeneriermittellösung konzentrierter sein, wohingegen die Salzsole 9 für eine salzsparende Regeneration mehr verdünnt wird. Die Praxis hat gezeigt, dass insbesondere ein Mischungsverhältnis Salzsole 9 zu Verdünnungswasser zwischen 1:3 und 1:8 eine hohe Salzausbeute bei akzeptabler Regenerationsgeschwindigkeit ergibt.

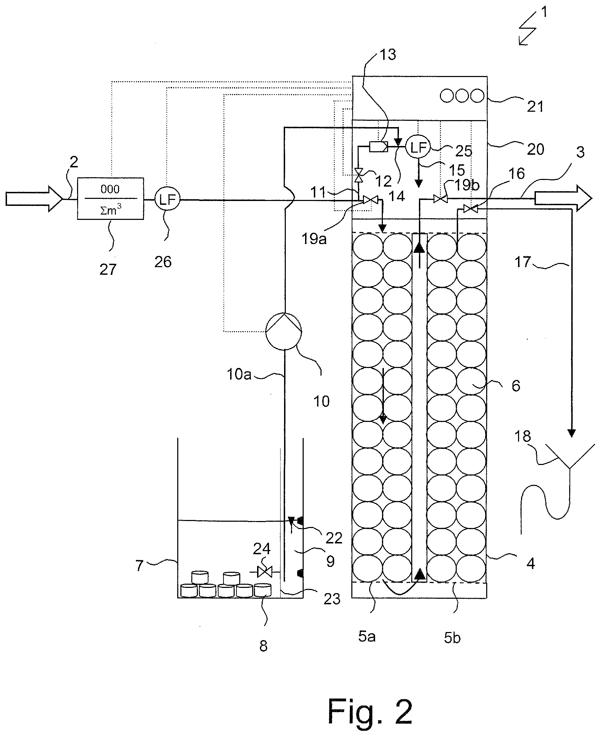

Die Regeneriermittellösung wird erst bereitet, wenn die Behälter 5a, 5b auch mit der Regeneriermittellösung beschickt werden. Die Salzsole 9 wird also erst während des Transports zum lonentauscherharz mit dem Verdünnungswasser vermischt; eine Zwischenlagerung von Regeneriermittellösung findet nicht statt. Die **Fig. 2** zeigt den schematischen Aufbau einer Ausführungsform einer erfindungsgemäßen Wasserenthärtungsanlage 1; im folgenden werden die Unterschiede zur Ausführungsform von Fig. 1 erläutert.

In der Ausführungsform von Fig. 2 wird die Konzentration der verdünnten Salzsole (Regeneriermittellösung) mittels eines Leitfähigkeitssensors 25 im Zulauf 15 für Regeneriermittellösung überwacht. Die gemessene Leitfähigkeit ist dabei direkt proportional zur Konzentration der Regeneriermittellösung.

Die Konzentration der Regeneriermittellösung wird von der elektronischen Steuereinheit 21 nachgeregelt, wenn die durch den Leitfähigkeitssensor 25 bestimmte Konzentration von einem vorgegebenen Sollwert SW abweicht. Konzentrationsschwankungen können sich beispielsweise durch unterschiedliche Lösezeiten des Salzes 8 im Vorratsgefäß 7 oder unterschiedliche Größen von Regeneriersalztabletten oder auch durch unterschiedliche Temperaturen ergeben. Die Konzentrationsunterschiede in der Salzsole 9 können durch Steuerung des Förderstroms der Pumpe 10 und/oder des Stroms von Verdünnungswasser am Regelorgan 13 ausgeglichen werden.

Insbesondere bei zu spätem Nachfüllen von festem Regeneriersalz kann der Beginn der Regeneration bereits vor Abschluss des Salzlösevorgangs gestartet werden. Der Leitfähigkeitssensor 25 erkennt den noch nicht abgeschlossenen Lösevorgang, und es wird entsprechend weniger stark verdünnt.

In einer nicht erfindungsgemäßen Anlage kann der Leitfähigkeitssensor 25 zur Steuerung der Konzentration der Regeneriermittellösung im Bereich der unverdünnten Salzsole 9 angeordnet sein; auch dann können Schwankungen in der Konzentration der Salzsole 9 erkannt werden. Zur Nachregelung der Konzentration der verdünnten Salzsole muss dann (zusätzlich zur Konzentration der unverdünnten Salzsole 9) der Anteil von Salzsole 9 und Verdünnungswasser in der Regeneriermittellösung bestimmt werden (etwa über die derzeitige Einstellung des Regelorgans 13 und den Förderstrom an der Pumpe 10).

Im gezeigten Beispiel sind zusätzlich ein Leitfähigkeitssensor 26 und ein Durchflussmesser 27 zur Steuerung des Beginns einer Regeneration im Bereich des zu behandelnden Rohwassers angeordnet. Über die Leitfähigkeit des Rohwassers kann auf die Rohwasserhärte geschlossen werden; zusammen mit dem Durchfluss an Rohwasser kann dann der Verbrauch an Enthärterkapazität im Vergleich zur Grundkapazität des lonentauscherharzes 6 mitverfolgt werden.

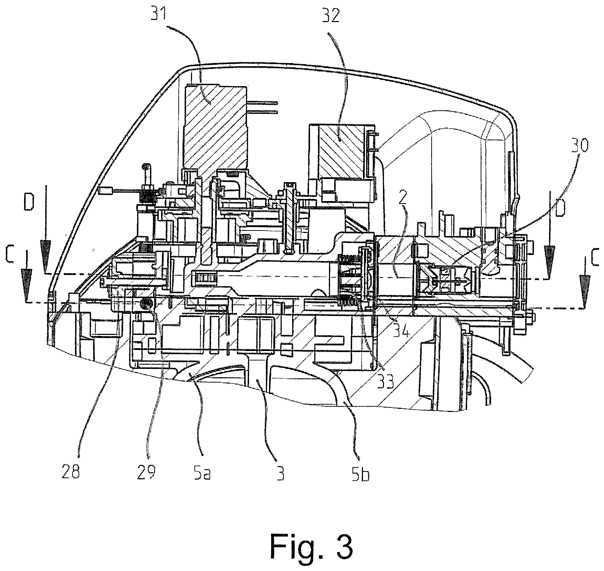

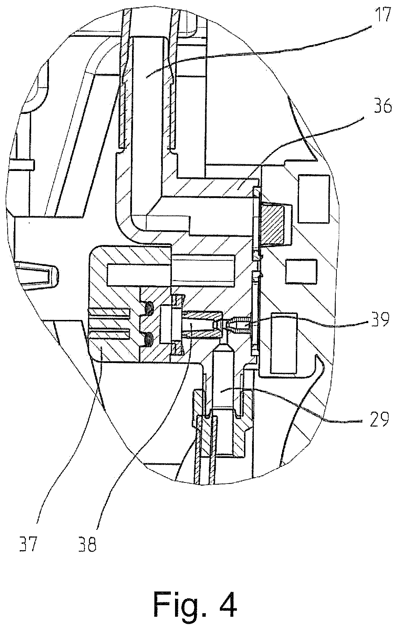

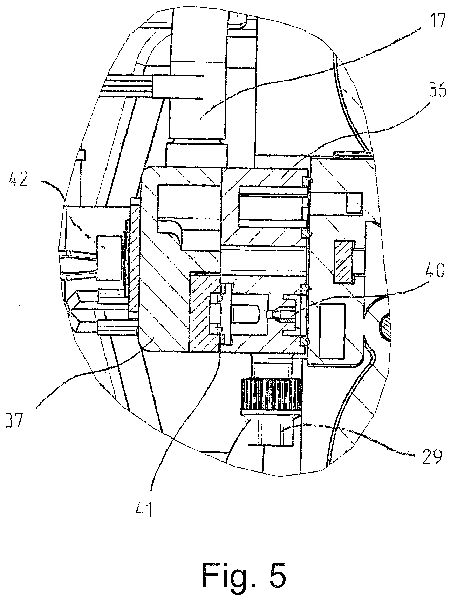

Die Figuren 3 bis 5 erläutern den Aufbau eines Steuerkopfes einer erfindungsgemäßen Wasserenthärtungsanlage, in welchem konzentrierte Salzsole und Verdünnungswasser gemäß der Erfindung gemischt werden. Fig. 3 zeigt einen Längsschnitt, während Fig. 4 einen horizontalen Schnitt entlang C-C (erste Detailansicht Mischkammersystem) und Fig. 5 einen horizontalen Schnitt entlang D-D (zweite Detailansicht Mischkammersystem) in Fig. 3 zeigt.

In **Fig. 3** ist ein Zulauf 2 für Rohwasser, welcher mit einem Durchflussmesser 30 ausgestattet ist, erkennbar. Mittels eines Rückschlagventils 33 wird ein Rückfluss von Salzsole ins Trinkwasser verhindert. Ein Überstromventil 34 öffnet eine Bypassleitung bei großen (von der Enthärtungsvorrichtung nicht mehr zu bewältigenden) Durchflüssen.

Ein Motor 31 dient zur Ventilsteuerung für die Regeneration, und ein Motor 32 dient der Ventilsteuerung für eine Verschneidung von Rohwasser und enthärtetem Wasser zur Bereitstellung von teilenthärtetem Wasser.

Eine nicht dargestellte Pumpe transportiert im Regenerationsbetrieb Salzsole über einen Zulauf 29 in ein Mischkammersystem 28, wo die Salzsole verdünnt wird.

Wie in **Fig. 4** und **Fig. 5** ersichtlich, wird die Salzsole über den Zulauf 29 in eine Mischkammer 38 eingebracht und dort mit Verdünnungswasser vermischt. Verdünnungswasser wird über zwei (vertikal übereinander liegende) Düsen 39, 40 in die Mischkammer 38 eingespeist. Dabei findet eine Vorverdünnung der Salzsole mit Verdünnungswasser aus Düse 39 statt. Die Feinabstimmung des Mischungsverhältnisses Salzsole zu Verdünnungswasser erfolgt mittels Verdünnungswasser aus der zweiten Düse 40.

Das Mischkammersystem 28 bzw. die Mischkammer 38 verfügt auch über eine Elektrode 41 zur Chlorerzeugung für eine Desinfektion des lonentauscherharzes. In Fig. 5 sind außerdem noch das Gehäuse 36 des Mischkammersystems, ein Deckel 37 der Mischkammer und eine Befestigungsschraube 42 für das Mischkammersystem erkennbar.

### Bezugszeichenliste

- 1:: Wasserenthärtungsanlage
- 2:: Zulauf für Rohwasser
- 3:: Ablauf für enthärtetes Wasser
- 4:: Enthärtungsvorrichtung
- 5a,5b:: Behälter
- 6:: Ionenaustauscherharz
- 7:: Vorratsgefäß
- 8:: Regeneriersalz
- 9:: Salzsole
- 10:: Pumpe
- 10a:: Salzsole führende Leitung
- 11:: Zulauf für Verdünnungswasser (Verdünnungswasser führende Leitung)
- 12:: Ventil
- 13:: Durchfluss-Regelorgan
- 14:: Dosierstelle
- 15:: Zulauf Regeneriermittellösung (Mischstrecke)
- 16:: Ventil
- 17:: Ablauf verbrauchte Regeneriermittellösung
- 18:: Abwasserkanal
- 19a:: Ventil
- 19b:: Ventil
- 20:: Steuerkopf der Wasserenthärtungsanlage
- 21:: elektronische Steuereinrichtung
- 22:: Schwimmerschalter
- 23:: Zwischenwand
- 24:: Ventil
- 25:: Leitfähigkeitssensor 1
- 26:: Leitfähigkeitssensor 2
- 27:: Durchflussmesser
- 28:: Mischkammersystem
- 29:: Zulauf Salzsole
- 30:: Durchflussmesser
- 31:: Motor 1 (Ventilsteuerung Regeneration)
- 32:: Motor 2 (Ventilsteuerung Verschneidung)
- 33:: Rückschlagventil (verhindert den Rückfluss von Sole ins Trinkwasser)
- 34:: Überströmventil (öffnet Bypassleitung bei großen Durchflüssen)
- 36:: Gehäuse Mischkammersystem
- 37:: Deckel Mischkammersystem
- 38:: Mischkammer
- 39:: Düse 1 für Verdünnungswasser
- 40:: Düse 2 für Verdünnungswasser
- 41:: Elektrode zur Chlorerzeugung für Desinfektion
- 42:: Befestigungsschraube für Mischkammersystem

## Patentansprüche

1. Verfahren zur Regeneration einer Wasserenthärtungsanlage (1), wobei Salzsole (9) mit Verdünnungswasser vermischt wird und die verdünnte Salzsole in eine Enthärtungsvorrichtung (4), insbesondere umfassend mindestens einen Behälter (5a, 5b) mit lonentauscherharz (6), eingeleitet wird, wobei Salzsole (9) während ihres Transports zur Enthärtungsvorrichtung (4) mit einer Pumpe (10) in einen Strom von Verdünnungswasser zudosiert wird,
**dadurch gekennzeichnet,**
**dass** die Konzentration der verdünnten Salzsole mit einem Sensor überwacht wird,
**dass** zur Überwachung der Konzentration der verdünnten Salzsole die Leitfähigkeit der verdünnten Salzsole gemessen wird, und dass das Mischungsverhältnis von Salzsole (9) und Verdünnungswasser in Abhängigkeit von der experimentell bestimmten Konzentration der verdünnten Salzsole nachgeregelt wird.

2. Verfahren nach Anspruch 1, **dadurch gekennzeichnet, dass** das Mischungsverhältnis von Salzsole (9) zu Verdünnungswasser auf einen Wert zwischen 1:1 und 1:15, bevorzugt zwischen 1:3 und 1:8 eingestellt wird.

3. Verfahren nach Anspruch 1 oder 2, **dadurch gekennzeichnet, dass** das Mischungsverhältnis von Salzsole (9) und Verdünnungswasser erst dann nachgeregelt wird, wenn die experimentell bestimmte Konzentration der verdünnten Salzsole um mehr als einen ersten Grenzwert GW1 von einem vorgegebenen Sollwert SW abweicht.

4. Verfahren nach einem der vorhergehenden Ansprüche, **dadurch gekennzeichnet, dass** eine Alarmmeldung erfolgt, wenn die experimentell bestimmte Konzentration der verdünnten Salzsole einen vorgegebenen Grenzwert GW2 unterschreitet.

5. Verfahren nach einem der vorhergehenden Ansprüche, **dadurch gekennzeichnet, dass** die Salzsole (9) mit der Pumpe (10) in den Sauganschluss eines Injektors dosiert wird.

6. Verfahren nach einem der vorhergehenden Ansprüche, **dadurch gekennzeichnet, dass** der Strom von Verdünnungswasser über ein Regelorgan (13) gesteuert wird.

7. Verfahren nach einem der vorhergehenden Ansprüche, **dadurch gekennzeichnet, dass** die verdünnte Salzsole vor der Einleitung in die Enthärtungsvorrichtung (4) eine Mischstrecke (15) durchfließt.

8. Verfahren nach einem der vorhergehenden Ansprüche, **dadurch gekennzeichnet, dass** ein gewünschter Wert (SW), auf den die Konzentration der verdünnten Salzsole eingeregelt wird, zwischen Regenerationen verändert wird.

9. Wasserenthärtungsanlage (1), umfassend
- eine Enthärtungsvorrichtung (4), insbesondere umfassend mindestens einen Behälter (5a, 5b) mit einem lonentauscherharz (6),
- ein Vorratsgefäß (7) enthaltend eine Salzsole (9),
- eine Pumpe (10), und
- eine elektrische Steuereinrichtung (21),
**dadurch gekennzeichnet,**
**dass** die Wasserenthärtungsanlage weiterhin einen Sensor zur Messung der Konzentration der durch das Verdünnungswasser verdünnten Salzsole umfasst,
**dass** die Pumpe (10) in einer Salzsole führenden Leitung (10a) angeordnet ist, die vom Vorratsgefäß (7) zu einer Dosierstelle (14) führt, an der die Salzsole führende Leitung (10a) mit einer Verdünnungswasser führenden Leitung (11) zusammengeführt ist, dass der Sensor ein Leitfähigkeitssensor (25) ist, mit dem die Leitfähigkeit der verdünnten Salzsole gemessen wird, und dass die elektronische Steuereinrichtung (21) dazu ausgebildet ist, anhand der vom Sensor übermittelten Messwerte ein Mischungsverhältnis von Salzsole (9) und Verdünnungswasser an der Dosierstelle (14) nachzuregeln.

10. Wasserenthärtungsanlage (1) nach Anspruch 9, **dadurch gekennzeichnet, dass** ein Signalgeber vorhanden ist.

11. Wasserenthärtungsanlage (1) nach einem der Ansprüche 9 bis 10,
**dadurch gekennzeichnet, dass** die Dosierstelle (14) als ein Injektor ausgebildet ist.

12. Wasserenthärtungsanlage (1) nach einem der Ansprüche 9 bis 11,
**dadurch gekennzeichnet, dass** in der Verdünnungswasser führenden Leitung (11) ein Regelorgan (13) angeordnet ist.

13. Wasserenthärtungsanlage (1) nach einem der Ansprüche 9 bis 12,
**dadurch gekennzeichnet, dass** eine Mischstrecke (15) vorhanden ist, die von der Dosierstelle (14) zur Enthärtungsvorrichtung (4) führt.

14. Wasserenthärtungsanlage (1) nach Anspruch 13, **dadurch**
**gekennzeichnet, dass** die Mischstrecke (15) eine Mischkammer (38) aufweist, in der eine Elektrode (41) für die Erzeugung von Chlor angeordnet ist.

15. Wasserenthärtungsanlage (1) nach einem der Ansprüche 9 bis 14, **dadurch gekennzeichnet, dass** an der Dosierstelle (14) zwei Düsen (39, 40) für Verdünnungswasser münden.

16. Wasserenthärtungsanlage (1) nach einem der Ansprüche 9 bis 15, **dadurch gekennzeichnet, dass** die elektrische Steuereinrichtung (21) dazu ausgebildet ist, einen gewünschten Wert (SW), auf den die Konzentration der verdünnten Salzsole eingeregelt wird, zwischen Regenerationen zu verändern.

## Claims

1. Method of regenerating a water softening system (1), wherein brine (9) is mixed with dilution water and the diluted brine is introduced into a softening device (4), in particular comprising at least one container (5a, 5b) comprising ion exchange resin (6), wherein brine (9) is added, while being transported to the softening device (4), to a flow of dilution water by means of a pump (10),
**characterized in**
**that** the concentration of the diluted brine is monitored by a sensor, that for monitoring the concentration of the diluted brine, the conductivity of the diluted brine is measured, and that the mixing ratio between brine (9) and dilution water is readjusted in dependence on the experimentally determined concentration of the diluted brine.

2. Method according to claim 1, **characterized in that** the mixing ratio between brine (9) and dilution water is adjusted to a value between 1:1 and 1:15, preferably between 1:3 and 1:8.

3. Method according to claim 1 or 2, **characterized in that** the mixing ratio between brine (9) and dilution water is readjusted only when the experimentally determined concentration of the diluted brine differs from a predetermined desired value SW by more than a first limit value GW1.

4. Method according to any one of the preceding claims, **characterized in that** an alarm signal is issued if the experimentally determined concentration of the diluted brine falls below a predetermined limit value GW2.

5. Method according to any one of the preceding claims, **characterized in that** the brine (9) is dosed into the suction connection of an injector by means of the pump (10).

6. Method according to any one of the preceding claims, **characterized in that** the dilution water flow is controlled by a control element (13).

7. Method according to any one of the preceding claims, **characterized in that** the diluted brine flows through a mixing section (15) prior to being introduced into the softening device (4).

8. Method according to any one of the preceding claims, **characterized in that** a desired value (SW), to which the concentration of the diluted brine is adjusted, is changed between regeneration processes.

9. Water softening system (1) comprising
- a softening device (4), in particular comprising at least one container (5a, 5b) containing an ion exchange resin (6),
- a storage container (7) containing brine (9),
- a pump (10), and
- an electric control device (21),
**characterized in**
**that** the water softening system moreover comprises a sensor for measuring the concentration of the brine diluted by the dilution water,
**that** the pump (10) is arranged in a line (10a) which carries brine and extends from the storage container (7) to a dosing point (14) where the line (10a) carrying brine merges with a line (11) carrying dilution water,
**that** the sensor is a conductivity sensor (25) which measures the conductivity of the diluted brine,
and **that** the electronic control device (21) is designed to readjust a mixing ratio between brine (9) and dilution water at the dosing point (14) on the basis of the measured values transmitted by the sensor.

10. Water softening system (1) according to claim 9, **characterized in that** a signal generator is provided.

11. Water softening system (1) according to any one of the claims 9 to 10, **characterized in that** the dosing point (14) is designed as an injector.

12. Water softening system (1) according to any one of the claims 9 through 11, **characterized in that** a control element (13) is arranged in the line (11) carrying the dilution water.

13. Water softening system (1) according to any one of the claims 9 to 12, **characterized in that** a mixing section (15) is provided which extends from the dosing point (14) to the softening device (4).

14. Water softening system (1) according to claim 13, **characterized in that** the mixing section (15) has a mixing chamber (38) in which an electrode (41) is arranged for generating chlorine.

15. Water softening system (1) according to any one of the claims 9 to 14, **characterized in that** two nozzles (39, 40) for dilution water open into the dosing point (14).

16. Water softening system (1) according to any one of the claims 9 to 15, **characterized in that** the electric control device (21) is designed to change a desired value (SW), to which the concentration of the diluted brine is adjusted, between regeneration processes.

## Revendications

1. Procédé de régénération d'une installation (1) d'adoucissement d'eau, sachant que de la saumure (9) est mélangée à de l'eau de dilution et que la saumure diluée est introduite dans un dispositif adoucisseur (4) comprenant notamment au moins un récipient (5a, 5b) contenant une résine (6) échangeuse d'ions, sachant que la saumure (9) est, pendant son transport vers le dispositif adoucisseur (4), additionnée de façon dosée par une pompe (10) à un flux d'eau de dilution,
**caractérisé en ce qu'**on surveille la concentration de la saumure diluée avec un capteur, **en ce que**, afin de surveiller la concentration de la saumure diluée, on mesure la conductivité de la saumure diluée, et **en ce qu'**on rajuste les proportions de mélange de la saumure (9) et de l'eau de dilution en fonction de la concentration déterminée expérimentalement de la saumure diluée.

2. Procédé selon la revendication 1, **caractérisé en ce que** les proportions de mélange de la saumure (9) par rapport à l'eau de dilution sont réglées à une valeur comprise entre 1:1 et 1:15, de préférence entre 1:3 et 1:8.

3. Procédé selon la revendication 1 ou 2, **caractérisé en ce que** les proportions de mélange de la saumure (9) et de l'eau de dilution ne sont rajustées que si la concentration déterminée expérimentalement de la saumure diluée diffère d'une valeur de consigne prédéfinie SW de plus d'une première valeur limite GW1.

4. Procédé selon l'une des revendications précédentes, **caractérisé en ce qu'**un premier message d'alarme a lieu si la concentration déterminée expérimentalement de la saumure diluée tombe en dessous d'une valeur limite prédéfinie GW2.

5. Procédé selon l'une des revendications précédentes, **caractérisé en ce que** la saumure (9) est dosée par la pompe (10) dans le branchement d'aspiration d'un injecteur.

6. Procédé selon l'une des revendications précédentes, **caractérisé en ce que** le flux d'eau de dilution est commandé au moyen d'un organe de régulation (13).

7. Procédé selon l'une des revendications précédentes, **caractérisé en ce que** la saumure diluée passe dans un parcours de mélangeage (15) avant d'être introduite dans le dispositif adoucisseur (4).

8. Procédé selon l'une des revendications précédentes, **caractérisé en ce qu'**une valeur souhaitée (SW), à laquelle est ajustée la concentration de la saumure diluée, est modifiée entre les régénérations.

9. Installation (1) d'adoucissement d'eau, comprenant
- un dispositif adoucisseur (4), comprenant notamment au moins un récipient (5a, 5b) contenant une résine (6) échangeuse d'ions,
- un réservoir (7) contenant une saumure (9),
- une pompe (10), et
- un dispositif de commande électrique (21),
**caractérisée en ce que** l'installation d'adoucissement d'eau comprend en outre un capteur pour mesurer la concentration de la saumure diluée par l'eau de dilution,
**en ce que** la pompe (10) est disposée dans une conduite (10a) transportant la saumure qui mène du réservoir (7) à un poste de dosage (14) où la conduite (10a) transportant la saumure est réunie à une conduite (11) transportant l'eau de dilution, **en ce que** le capteur est un capteur de conductivité (25) avec lequel on mesure la conductivité de la saumure diluée, et **en ce que** le dispositif de commande électrique (21) est conçu pour rajuster au poste de dosage (14) des proportions de mélange de la saumure (9) et de l'eau de dilution à l'aide des valeurs mesurées transmises par le capteur.

10. Installation (1) d'adoucissement d'eau selon la revendication 9, **caractérisée en ce qu'**un transmetteur de signaux est présent.

11. Installation (1) d'adoucissement d'eau selon l'une des revendications 9 à 10, **caractérisée en ce que** le poste de dosage (14) est réalisé sous la forme d'un injecteur.

12. Installation (1) d'adoucissement d'eau selon l'une des revendications 9 à 11, **caractérisée en ce qu'**un organe de régulation (13) est disposé dans la conduite (11) transportant l'eau de dilution.

13. Installation (1) d'adoucissement d'eau selon l'une des revendications 9 à 12, **caractérisée en ce qu'**un parcours de mélangeage (15) est présent, qui mène du poste de dosage (14) au dispositif adoucisseur (4).

14. Installation (1) d'adoucissement d'eau selon la revendication 13, **caractérisée en ce que** le parcours de mélangeage (15) présente une chambre de mélangeage (38) dans laquelle est disposée une électrode (41) pour la production de chlore.

15. Installation (1) d'adoucissement d'eau selon l'une des revendications 9 à 14, **caractérisée en ce que** deux buses (39, 40) pour l'eau de dilution débouchent au poste de dosage (14).

16. Installation (1) d'adoucissement d'eau selon l'une des revendications 9 à 15, **caractérisée en ce que** le dispositif de commande électrique (21) est conçu pour modifier entre les régénérations une valeur souhaitée (SW) à laquelle est ajustée la concentration de la saumure diluée.
